# EUROPÄISCHE PATENTSCHRIFT

(11) **EP 1 230 809 B1**
(45) Veröffentlichungstag und Bekanntmachung des Hinweises auf die Patenterteilung: **24.01.2007**
(21) Anmeldenummer: 00987162.5
(22) Anmeldetag: 16.11.2000
(51) Int. Cl.: H04Q 3/00

(54) **VERFAHREN UND KOMMUNIKATIONSANORDNUNG ZUR REALISIERUNG VON TEILNEHMERLEISTUNGSMERKMALEN**
METHOD AND COMMUNICATIONS ARRANGEMENT FOR REALISING USER PERFORMANCE CHARACTERISTICS
PROCEDE ET DISPOSITIF DE COMMUNICATION POUR LA MISE AU POINT DE CARACTERISTIQUES DE PERFORMANCES CONCERNANT DES ABONNES

(30) Priorität: 19.11.1999 DE 19955760
(43) Veröffentlichungstag der Anmeldung: 14.08.2002
(73) Patentinhaber: SIEMENS AKTIENGESELLSCHAFT, 80333 München (DE)
(72) Erfinder: LANTERMANN, Jürgen, 81477 München (DE); BAUMERT, Norbert, 86949 Windach (DE)
(86) Internationale Anmeldenummer: PCT/DE2000/004070
(87) Internationale Veröffentlichungsnummer: WO 2001/039519

(56) Entgegenhaltungen:
- EP-A- 0 810 800
- WO-A-98/25392
- US-A- 5 574 783
- US-A- 5 987 115
- LAUTENSCHLAGER W ET AL: "ROUTING SERVICE FOR THE PROVISION OF NUMBER PORTABILITY" PROCEEDINGS OF ISS'97, Bd. 2, 21. - 26. September 1997, Seiten 235-242, XP000704473

## Beschreibung

Aktuelle Kommunikationsnetze bzw. Telekommunikationsnetze sind aus Kommunikationseinrichtungen, Vermittlungseinrichtungen und diese Einrichtung verbindenden, draht- bzw. leitungsgebundenen und drahtlosen Verbindungen gebildet, wobei an die Vermittlungseinrichtungen - auch Netzknoten bezeichnet - die jeweils einzelnen Teilnehmern zugeordneten Kommunikationseinrichtungen bzw. Kommunikationsendeinrichtungen - z.B. Fernsprechendgeräte oder Personalcomputer - angeschlossen sind. Zur Informationsübermittlung zwischen an einem gemeinsamen Netzknoten angeschlossenen Kommunikationseinrichtungen können Verbindungen direkt über den gemeinsam genutzten Netzknoten vermittelt werden. Um eine Informationsübermittlung zwischen an unterschiedlichen Netzknoten angeschlossenen Kommunikationsendeinrichtungen bzw. Teilnehmern zu ermöglichen, ist eine Vernetzung der einzelnen Netzknoten beispielsweise über Zwischenamtsleitungen - auch als "Trunks" bezeichnet - erforderlich.

In aktuellen Telekommunikationsnetzen angeordnete, digitale Vermittlungseinrichtungen - beispielsweise ein digitales Vermittlungssystem "EWSD" der Fa. Siemens AG - basieren auf einem digitalen Koppelnetz und einer koordinierenden Steuerung, die durch periphere Prozessoren unterstützt wird. Das Vermittlungssystem weist einen modularen Aufbau auf, d.h. um einen zentralen Kern aus Koordinationsprozessor, Koppelfeld und Taktgenerator sind die Anschlußgruppen für die externen Leitungen - wie z.B. Teilnehmerleitungen und Verbindungsleitungen - je nach Anforderung angeschlossen. Über das Koppelnetz werden alle Nutzkanalverbindungen vermittelt. Die Anschlußgruppe bildet die Schnittstelle zum Anschluß der externen Leitungen. Für den Anschluß der verschiedenen Arten von externen Leitungen, wie analoge oder digitale Teilnehmerleitungen und Verbindungsleitungen - z.B. zu weiteren Vermittlungseinrichtungen oder Kommunikationsnetzen -, sind unterschiedlich ausgestaltete Anschlußgruppen vorhanden. Die Anschlußgruppen umfassen jeweils mehrere Anschlußeinheiten - im folgenden auch als Teilnehmerleitungseinheiten bezeichnet - zur Anpassung der externen Leitungen, einschließlich der PCM-Codierung, an eine systeminterne Schnittstelle.

Durch die Betreiber von aktuellen Kommunikationsnetzen erfolgt ein hoher Investitionsaufwand, insbesondere bei in den jeweiligen Kommunikationsnetzen angeordneten Einrichtungen - z.B. Vermittlungseinrichtungen auf Orts- und Transitebene, internationale Kopfämter, Gateways zu anderen Netzbetreibern, Netzsignalisierungseinrichtungen, Bedien- und Wartungszentren, Teilnehmer- und Zwischenamtsleitungen mit entsprechenden Anschluß- und Übertragungseinrichtungen. Im finanz- bzw. bilanztechnischem Sinne werden die in Kommunikationsnetzen angeordneten Einrichtungen, insbesondere Vermittlungseinrichtungen mit einer Abschreibungszeit von 12 bis 30 Jahren bewertet. Der jährliche Aufwand an Investitionen seitens der Netzbetreiber umfaßt normalerweise einen Bruchteil des Gesamtkapitals an festen Gütern. Dem Investitionsverhalten der Netzbetreiber liegt das Ziel zugrunde, das bereits in dem Kommunikationsnetzen investierte Gesamtkapital auch längerfristig zu sichern, insbesondere in Zeiten kürzer werdender Investitionszyklen.

Hinsichtlich der Kostenverteilung aktueller Vermittlungseinrichtungen ist festzustellen, daß annähernd die Hälfte der einer Vermittlungseinrichtung zuzurechnenden Kosten auf die in der jeweiligen Vermittlungseinrichtung angeordneten Anschlußgruppen bzw. Teilnehmerleitungseinheiten entfällt. In aktuellen Kommunikationsnetzen finden jedoch insbesondere auf Seiten der Teilnehmer bzw. im Teilnehmeranschlußbereich die meisten Innovationen statt. Beispielsweise werden neue Teilnehmerleistungsmerkmale - auch als "Features" bezeichnet - entwickelt, durch welche den einzelnen im Kommunikationsnetz angeordneten Teilnehmern, ein größerer Komfort bei gleichzeitiger erhöhter Verfügbarkeit der einzelnen Teilnehmerleistungsmerkmale bereitgestellt wird. Durch die Einführung neuer Teilnehmerleistungsmerkmale wird eine Steigerung des Umsatzes auf Seiten der Netzbetreiber erreicht. Durch die im Umfeld der globalen Marktentwicklung entstandene Marktverdrängung ist den aktuellen Kommunikationsnetzen beispielsweise eine Situation entstanden, bei der bei vereinzelt im Kommunikationsnetz angeordneten Vermittlungseinrichtungen, insbesondere bei Vermittlungseinrichtungen von Fremdherstellern keine Weiterentwicklung erfolgt ist und beispielsweise die von diesen Vermittlungseinrichtungen bereitgestellten Teilnehmerleistungsmerkmale auf einen seit Jahren überholten, d.h. veralteten Versionsstand stehengeblieben sind. Ist seitens eines Netzbetreibers eine Aktualisierung der den Teilnehmern bereitgestellten Teilnehmerleistungsmerkmale geplant, müssen die Teilnehmer an eine "neue" Vermittlungseinrichtung mit einem aktuellen Teilnehmerleistungsmerkmal-Versionsstand angeschlossen werden. Dies ist mit einem sehr hohen wirtschaftlichen Aufwand verbunden.

In Dokument WO 9825392A werden Kommunikationseinrichtungen, die an einer ersten Vermittlungseinrichtung angeschlossen sind, über eine weitere Vermittlungseinrichtung (network call center) mit virtuellen Kommunikationseinrichtungen verbunden, die eine bestimmte Dienstleistung anbieten.

Der Erfindung liegt die Aufgabe zugrunde, den wirtschaftlichen Aufwand für die Bereitstellung von neuen bzw. aktualisierten Teilnehmerleistungsmerkmalen für einzelne oder mehrere in einem Kommunikationsnetz angeordnete Kommunikationsendeinrichtungen bzw. Teilnehmer zu reduzieren. Die Aufgabe wird ausgehend von einem Verfahren und einer Kommunikationsanordnung gemäß dem Oberbegriff der Patentansprüche 1 und 20 durch deren kennzeichnende Merkmale gelöst.

Beim erfindungsgemäßen Verfahren zur Realisierung von Teilnehmerleistungsmerkmalen für zumindest eine Kommunikationsendeinrichtung ist die Kommunikationsendeinrichtung an eine zumindest teilweise die Leistungsmerkmale nicht bereitstellende Vermittlungseinrichtung angeschlossen. Der wesentliche Aspekt des erfindungsgemäßen Verfahrens besteht darin, daß die zumindest eine physikalisch an die Vermittlungseinrichtung angeschlossene Kommunikationsendeinrichtung einer mit der Vermittlungseinrichtung verbundenen, die Teilnehmerleistungsmerkmale bereitstellenden, weiteren Vermittlungseinrichtung als virtuelle Kommunikationsendeinrichtung zugeordnet wird, wobei die Teilnehmerleistungsmerkmale für die virtuelle Kommunikationsendeinrichtung zumindest teilweise durch die weitere Vermittlungseinrichtung gesteuert werden.

Der wesentliche Vorteil des erfindungsgemäßen Verfahrens besteht darin, daß in aktuellen Kommunikationsnetzen bereits angeordnete, beispielsweise "veraltete", d.h. nur einen begrenzten Umfang an Teilnehmerleistungsmerkmalen bereitstellende Vermittlungseinrichtungen weiterhin für den Anschluß von Kommunikationsendeinrichtungen an das Kommunikationsnetz genutzt werden, wobei die eigentliche Steuerung der Teilnehmerleistungsmerkmale durch eine weitere bzw. übergeordnete, alle aktuellen Teilnehmerleistungsmerkmale bereitstellende Vermittlungseinrichtung gesteuert wird. Beispielsweise werden im Rahmen des erfindungsgemäßen Verfahrens die bereits existierenden Vermittlungseinrichtungen wie Konzentratoren genutzt, welche an die weitere, die eigentliche Steuerung der Teilnehmerleistungsmerkmale abwickelnde, Vermittlungseinrichtung angeschlossen sind. Die durch das erfindungsgemäße Verfahren erreichte Reduzierung des wirtschaftlichen Aufwands liegt darin, daß der für die Realisierung des erfindungsgemäßen Verfahrens erforderliche Aufwand - z.B. der Aufwand für die benötigten Anschluß- bzw. Verbindungs-Baugruppen und der Aufwand für Steuereinrichtungen zur Ansteuerung der als Konzentrator betriebenen Vermittlungseinrichtungen - nur ein Bruchteil von direkt angeschlossenen Teilnehmerleitungseinheiten umfaßt. Durch das Ausnutzen, bzw. durch die Wiederverwertung der in den bereits installierten Vermittlungseinrichtungen angeordneten Anschlußgruppen für den Anschluß der Teilnehmer kann der Aufwand zur Anschaffung einer neuen, modernen Vermittlungseinrichtung erheblich reduziert werden.

Aus Sicht eines Herstellers von Vermittlungseinrichtungen kann das erfindungsgemäße Verfahren vorteilhaft auch in Kommunikationsnetzen mit darin angeordneten Vermittlungseinrichtungen eines Fremdherstellers eingesetzt werden, insbesondere dann wenn durch die bereits installierten Vermittlungseinrichtungen des Fremdherstellers nur ein begrenzter Umfang an Teilnehmerleistungsmerkmalen - d.h. nicht alle von einer Vermittlungseinrichtung eigener Herstellung nutzbaren Leistungsmerkmale - bereitgestellt wird. In diesem Fall kann mit Hilfe des erfindungsgemäßen Verfahrens für eine beliebige Anzahl von an die Vermittlungseinrichtung des Fremdherstellers angeschlossenen Teilnehmern durch die Anordnung einer weiteren Vermittlungseinrichtung eigener Herstellung alle gewunschten Teilnehmerleistungsmerkmale bereitgestellt werden, wobei die bereits installierten Vermittlungseinrichtungen des Fremdherstellers weiterhin für den Anschluß der einzelnen Teilnehmer nutzbar sind. Mit Hilfe des erfindungsgemäßen Verfahrens kann gezielt für bestimmte an eine Vermittlungseinrichtung angeschlossene Kommunikationsendeinrichtungen der Umfang an bereitgestellten Teilnehmerleistungsmerkmalen erweitert werden, wobei die weiteren an die Vermittlungseinrichtung angeschlossenen Kommunikationsendeinrichtungen im vermittlungstechnischen und betriebstechnischen Sinne der Vermittlungseinrichtung zugeordnet bleiben.

Vorteilhaft ist die Vermittlungseinrichtung derart administriert, daß bei einer Aktivierung der zumindest einen Kommunikationsendeinrichtung automatisch eine Nutzkanalverbindung zur weiteren Vermittlungseinrichtung aufgebaut und die Kommunikationsendeinrichtung mit der aufgebauten Nutzkanalverbindung vermittelt wird - Anspruch 2. Durch diese vorteilhafte Ausgestaltung ist das erfindungsgemäße Verfahren ohne Änderung der in der Vermittlungseinrichtung angeordneten Steuersoftware realisierbar; zur Realisierung des erfindungsgemäßen Verfahrens muß lediglich das den automatischen Aufbau der Nutzkanalverbindung steuernde Teilnehmerleistungsmerkmal in der Vermittlungseinrichtung per Administration entsprechend eingestellt werden.

Gemäß einer weiteren vorteilhaften Ausgestaltung werden für die zumindest eine Kommunikationsendeinrichtung über die aufgebaute Nutzkanalverbindung und die Vermittlungseinrichtung eindeutig adressierende Identifizierungs-Informationen an die weitere Vermittlungseinrichtung übermittelt werden. Über die Nutzkanalverbindung werden Konfigurierungs-Informationen von der Kommunikationsendeinrichtung und/oder der von der Vermittlungseinrichtung an die weitere Vermittlungseinrichtung übermittelt und in der weiteren Vermittlungseinrichtung die Teilnehmerleistungsmerkmale in Abhängigkeit von den übermittelten Konfigurierungs-Informationen für die entsprechende virtuelle Kommunikationsendeinrichtung aktiviert bzw. konfiguriert - Anspruch 3. Durch das Übermitteln der Identifizierungs-Informationen wird die Kommunikationsendeinrichtung in der weiteren Vermittlungseinrichtung als virtuelle Kommunikationsendeinrichtung erkannt und die Teilnehmerleistungsmerkmale für die Kommunikationsendeinrichtung bzw. für die virtuelle Kommunikationsendeinrichtung entsprechend konfiguriert.

Vorteilhaft erfolgt ein Aufbau einer Kommunikationsbeziehung von und zu der zumindest einen physikalisch an die Vermittlungseinrichtung angeschlossenen Kommunikationsendeinrichtung im vermittlungstechnischen Sinne über die weitere Vermittlungseinrichtung, wobei bei einem von der Kommunikationsendeinrichtung initiierten Aufbau einer Kommunikationsbeziehung die Signalisierung der Kommunikationsbeziehung durch die weitere Vermittlungseinrichtung gesteuert wird - Anspruch 4. Durch den Aufbau aller Kommunikationsbeziehungen über die weitere Vermittlungseinrichtung - auch als Rufkanalisierung bezeichnet - kann durch die weitere Vermittlungseinrichtung der aktuelle vermittlungs- und betriebstechnische Zustand der physikalisch an die Vermittlungseinrichtung angeschlossenen Kommunikationsendeinrichtung zentral erfaßt werden, so daß vorteilhaft die Teilnehmerleistungsmerkmale für die virtuelle Kommunikationsendeinrichtung in Abhängigkeit des erfaßten, aktuellen vermittlungs- und/oder betriebstechnischen Zustandes steuerbar sind - Anspruch 14.

Gemäß einer weiteren vorteilhaften Ausgestaltung sind die die zumindest eine Kommunikationsendeinrichtung adressierenden Identifizierungs-Informationen in der Vermittlungseinrichtung und in der weiteren Vermittlungseinrichtung gespeichert - Anspruch 9. Durch diese vorteilhafte Ausgestaltung ist der Aufbau einer der Kommunikationsendeinrichtung eindeutig zuordenbaren Nutzkanalverbindung zwischen der Vermittlungseinrichtung und der weiteren Vermittlungseinrichtung möglich.

Vorteilhaft werden durch die weitere Vermittlungseinrichtung gruppenspezifische Leistungsmerkmale bereitgestellt, wobei zumindest ein Teil der an die zumindest eine Vermittlungseinrichtung angeschlossenen Kommunikationsendeinrichtungen und optional zumindest eine an die weitere Vermittlungseinrichtung angeschlossene Kommunikationsendeinrichtung zumindest einer Gruppe zuordenbar sind - Anspruch 16. Durch diese vorteilhafte Ausgestaltung für zumindest eine einer Gruppe zugeordnete Kommunikationsendeinrichtung auf kostengünstige Weise Funktionen einer Nebenstellenanlage bereitgestellt werden.

Weitere vorteilhafte Ausgestaltungen des erfindungsgemäßen Verfahrens sowie eine Kommunikationsanordnung zur Realisierung von Teilnehmerleistungsmerkmalen sind den weiteren Ansprüchen zu entnehmen.

Im Folgenden wird das erfindungsgemäße Verfahren anhand zweier Blockschaltbilder näher erläutert. Dabei zeigen:
- FIG 1: eine beispielhafte Anordnung eines aktuellen Kommunikationsnetzes mit darin angeordneten Vermittlungseinrichtungen, durch welche nur ein begrenzter Umfang an Teilnehmerleistungsmerkmalen für daran angeschlossen Kommunikationsendeinrichtungen bereitgestellt wird,
- FIG 2: eine beispielhafte Realisierung des erfindungsgemäßen Verfahrens zur Bereitstellung eines erweiterten Umfangs von Teilnehmerleistungsmerkmalen in dem Kommunikationsnetz gemäß FIG 1,
- FIG 3: eine Realisierungsvariante einer für die Durchführung des erfindungsgemäßen Verfahrens erforderlichen Rufkanalisierung, und
- FIG 4: eine weitere Realisierungsvariante der für die Durchführung des erfindungsgemäßen Verfahrens erforderlichen Rufkanalisierung.

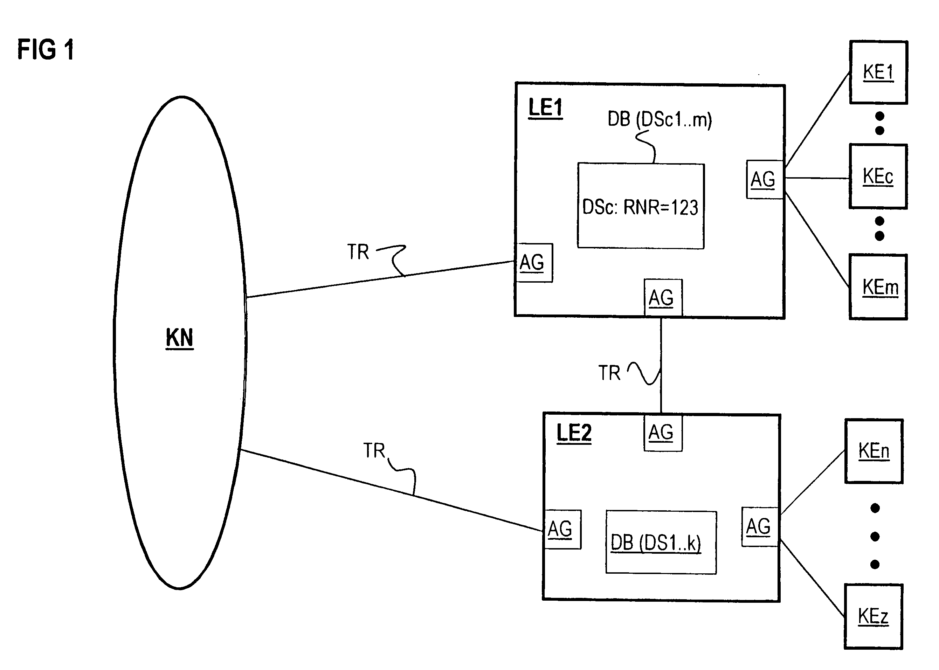

FIG 1 zeigt in einem Blockschaltbild eine beispielhafte Anordnung eines aktuellen als Fernsprechnetz ausgestalteten Kommunikationsnetzes. Im Blockschaltbild sind zwei Vermittlungseinrichtungen LE1,2 dargestellt, welche jeweils über Anschlußgruppen AG und Zwischenamtsleitungen TR sowohl untereinander vermascht als auch mit einem übergeordneten Kommunikationsnetz KN verbunden sind. Die beiden Vermittlungseinrichtungen LE1,2 weisen weitere Anschlußgruppen AG auf, über welche mehrere Kommunikationsendeinrichtungen KE1...m, KEn...z an die beiden Vermittlungseinrichtungen LE1,2 angeschlossen sind. Die einzelnen Kommunikationseinrichtung KE1...m, KEn...z können als analoge oder digitale Kommunikationsendgeräte ausgestaltet sein - z.B. als Personalcomputer oder als analoge bzw. digitale Fernsprechendgeräte. Die beiden Vermittlungseinrichtungen LE1,2 weisen jeweils eine Datenbasis DB mit darin angeordneten Datensätzen DS1...m DS1...k auf, wobei für jede angeschlossene Kommunikationsendeinrichtung KE1...m, KEn...z ein Datensatz DS1...m, DS1...k zum Speichern von Kommunikationsendeinrichtungs-individuellen Informationen vorgesehen ist. In jedem Datensatz DS1...m, DS1...k ist unter anderem eine die jeweilige Kommunikationsendeinrichtung KE1...m, KEn...z innerhalb des Kommunikationsnetzes KN eindeutig adressierende Identifizierungs-Information gespeichert. Die Identifizierungs-Information ist beispielsweise als Teilnehmerrufnummer RNR ausgestaltet, welche für den Aufbau von Kommunikationsbeziehungen innerhalb des Kommunikationsnetzes KN erforderlich ist. Durch eine in der Datenbasis DB gespeicherte Teilnehmerrufnummer RNR ist gleichzeitig die der angeschlossenen Kommunikationsendeinrichtung KE1...m, KEn...z entsprechend zugeordnete Teilnehmeranschlußleitung identifiziert.

Für dieses Ausführungsbeispiel sei angenommen, daß die an die erste Vermittlungseinrichtung LE1 angeschlossene Kommunikationsendeinrichtung KEc als analoge Fernsprechendeinrichtung ausgestaltet ist, welchem die Teilnehmerrufnummer RNR = 123 zugeordnet ist. Die zugeordnete Rufnummer RNR = 123 ist im entsprechenden Datensatz DSc der Datenbasis DB gespeichert. Des Weiteren sei angenommen, daß durch die erste und zweite Vermittlungseinrichtung LE1,2 nur ein beschränkter Umfang von Teilnehmerleistungsmerkmalen den an die erste Vermittlungseinrichtung LE1 angeschlossenen Kommunikationsendeinrichtungen KE1...m bereitgestellt wird. Der als Fernsprechendeinrichtung ausgestalteten Kommunikationsendeinrichtung KEc soll nun mit Hilfe des nachfolgend erläuterten, erfindungsgemäßen Verfahrens ein erweiteter Umfang an Teilnehmerleistungsmerkmalen bereitgestellt werden.

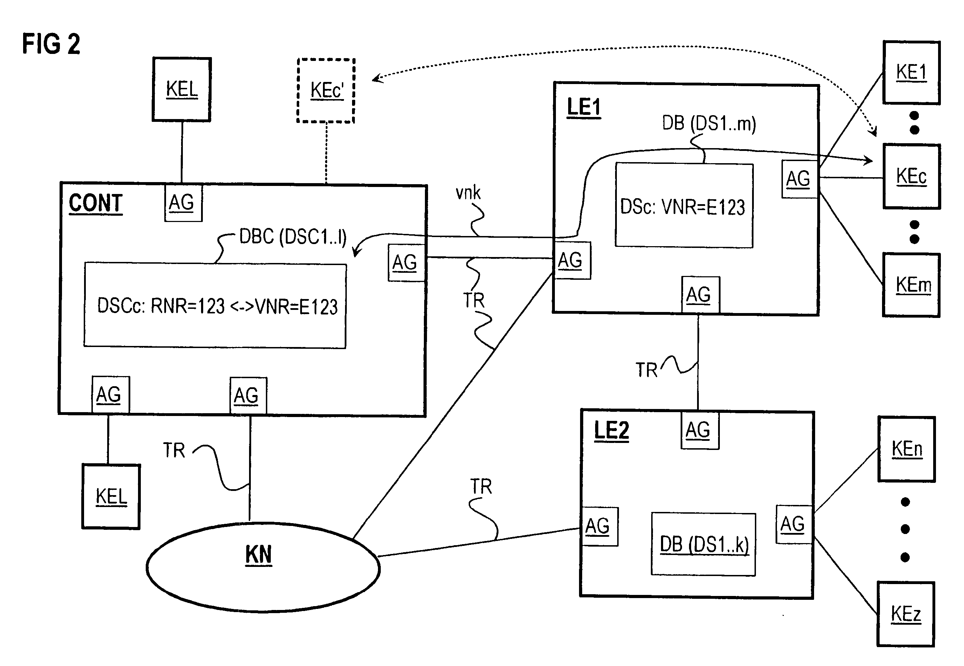

FIG 2 zeigt beispielhaft eine Realisierung des erfindungsgemäßen Verfahrens zur gewünschten Erweiterung der für das analoge Fernsprechendgerät KEc bereitgestellten Teilnehmerleistungsmerkmale. FIG 2 zeigt die in FIG 1 dargestellten, über Zwischenamtsleitungen TR miteinander verbundenen Vermittlungseinrichtungen LE1,2 mit den daran angeschlossenen Kommunikationsendeinrichtungen KE1...m, KEn...z, so daß auf diese nicht näher eingegangen wird. Im Gegensatz zu FIG 1 ist in FIG 2 die erste Vermittlungseinrichtung LE1 über eine weitere Zwischenamtsleitung TR an eine Anschlußgruppe AG einer weiteren Vermittlungseinrichtung CONT angeschlossen. Die weitere Vermittlungseinrichtung CONT ist beispielsweise als modernes, leistungsfähiges Vermittlungssystem ausgestaltet, durch welche der oben genannte, erweiterte Umfang an Teilnehmerleistungsmerkmalen bereitgestellt wird. Im Folgenden wird die den erweiterten Umfang an Teilnehmerleistungsmerkmalen bereitstellende Vermittlungseinrichtung CONT als Kontroll-Vermittlungseinrichtung bezeichnet. An die Kontroll-Vermittlungseinrichtung CONT sind über weitere Anschlußgruppen bzw. Teilnehmeranschlußleitungen weitere lokale Kommunikationsendeinrichtungen KEL angeschlossen. Die Kontroll-Vermittlungseinrichtung CONT ist über eine weitere Anschlußgruppe AG mit dem übergeordneten Kommunikationsnetz KN verbunden. Die Kontroll-Vermittlungseinrichtung CONT weist eine Datenbasis DBC mit darin angeordneten Datensätzen DSC1...1 auf. Die Datensätze DSC1...1 sind jeweils einer lokal angeschlossenen Kommunikationsendeinrichtung KEL zugeordnet, wobei in jedem Datensatz DSC1...1 jeweils kommunikationsendeinrichtungs-individuelle Informationen zum Aufbau von Kommunikationsbeziehungen zwischen den an die Kontroll-Vermittlungseinrichtung CONT angeschlossenen, lokalen Kommunikationsendeinrichtungen KEL und dem übergeordneten Kommunikationsnetz KN gespeichert sind. Des Weiteren können den angeschlossenen, lokalen Kommunikationsendeinrichtungen KEL jeweils kommunikationsendeinrichtungs-individuell Teilnehmerleistungsmerkmale zugeordnet werden, wobei die jeweils zugeordneten Teilnehmerleistungsmerkmale repräsentierende Informationen in den jeweiligen Datensätzen DSC1 ... 1 gespeichert sind.

Gemäß dem erfindungsgemäßen Verfahren wird das physikalisch an die erste Vermittlungseinrichtung LE1 angeschlossene, analoge Fernsprechendgerät KEc die Kontroll-Vermittlungseinrichtung CONT als virtuelle Kommunikationsendeinrichtung KEc' bzw. als virtueller Teilnehmer zugeteilt - in FIG 2 durch einen strichlierten Doppelpfeil verdeutlicht -, wobei ein entsprechender Datensatz DSCc für die virtuell zugeordnete Kommunikationsendeinrichtung KEc' in der Datenbasis DBC des Controllers CONT vorgesehen ist. In dem für die virtuelle Kommunikationsendeinrichtung KEc vorgesehenen Datensatz DSCc ist die dem analogen Fernsprechendgerät KEc ursprünglich zugeordnete Teilnehmerrufnummer RNR = 123 zum Aufbau von Kommunikationsbeziehungen innerhalb des Kommunikationsnetz KN gespeichert. Im Gegensatz zu den lokal an den Controller CONT angeschlossenen, "realen" Kommunikationsendeinrichtungen KEL ist der virtuell zugeordneten Fernsprechendeinrichtung KEc' keine Teilnehmeranschlußleitung als Kommunikationsendeinrichtungs-individuelle Information zugeordnet; erfindungsgemäß sind in dem entsprechenden Datensatz DSCc Adressierungs- bzw. Identifizierungs-Informationen gespeichert, durch welche eine Nutzkanalverbindung vnk über die Zwischenamtsleitung TR zum realen, d.h. physikalisch an die erste Vermittlungseinrichtung LE1 angeschlossenen Fernsprechendgerät KEc aufgebaut werden kann. Der virtuellen Kommunikationsendeinrichtung KEc' können die durch die Kontroll-Vermittlungseinrichtung CONT bereitgestellten Teilnehmerleistungsmerkmale zugeteilt werden, wobei entsprechende Konfigurierungs-Informationen im jeweiligen Datensatz DSCc gespeichert werden.

Die in der Datenbasis DBC der Kontroll-Vermittlungseinrichtung CONT im entsprechenden Datensatz DSCc gespeicherten Adressierungsinformationen umfassen beispielsweise eine Identifikation einer Verbindung zur ersten Vermittlungseinrichtung LE1 über die Zwischenamtsleitung TR und zusätzlich eine nur intern zwischen der Kontroll-Vermittlungseinrichtung CONT und der ersten Vermittlungseinrichtung LE1 verwendete Teilnehmerrufnummer VNR. Die interne Teilnehmerrufnummer VNR ist vom Kommunikationsnetz aus nicht wählbar und ist mit Hilfe eines einfachen Algorithmus aus der ursprünglich der Kommunikationsendeinrichtung KEc zugeordneten Teilnehmerrufnummer RNR ableitbar. Im Folgendem wird die interne Teilnehmerrufnummer VNR auch als virtuelle Teilnehmerrufnummer bezeichnet. In diesem Ausführungsbeispiel wird die virtuelle Teilnehmerrufnummer VNR dadurch gebildet, daß der ursprünglich dem Fernsprechendgerät KEc zugeordneten Teilnehmerrufnummer RNR = 123 eine Ziffer aus dem hexadezimalen Zahlenbereich vorangestellt wird. In diesem Ausführungsbeispiel wird dem analogen Fernsprechendgerät KEc die virtuelle Rufnummer VNR = E123 zugeordnet. Die virtuelle Teilnehmerrufnummer VNR = 123 wird in dem entsprechenden Datensatz DSc in der Datenbasis DB der ersten Vermittlungseinrichtung LE1 anstelle der ursprünglich zugeteilten, Teilnehmerrufnummer RNR = 123 gespeichert. Die virtuelle Teilnehmerrufnummer VNR = E123 wird gleichzeitig in dem für die virtuelle Fernsprechendeinrichtung KEc' vorgesehenen Datensatz DSCc in der Datenbasis DBC des Controllers CONT gespeichert. Erfindungsgemäß ist im Datensatz DSCc eine Zuordnung der der virtuellen Fernsprechendeinrichtung KEc' jeweils zugeordneten, realen Teilnehmerrufnummer und der entsprechenden virtuellen Teilnehmerrufnummer gespeichert - hier RNR = 123 ⇔ VNR = E123.

Die dem Controller CONT virtuell zugeordnete Fernsprechendeinrichtung KEc' ist wie eine lokal an den Controller CONT angeschlossene Kommunikationsendeinrichtung KEL administrierbar. Der virtuellen Fernsprechendeinrichtung KEc' können mittels Administrierung ein Großteil der Teilnehmerleistungsmerkmale eines realen Teilnehmers zugeordnet werden. Beispielsweise können der virtuellen Fernsprechendeinrichtung KEc' mehrere Teilnehmerrufnummern zugeteilt werden, und eingehende Rufe aufgenommen, weitergeleitet oder abgewiesen werden. Die virtuelle Fernsprechendeinrichtung KEc' kann weiterhin einer "Hunting-Group" oder einer Centrex-Gruppe zugeordnet werden. Für eine kommunikationsendeinrichtungsindividuelle Einstellung bzw. Konfigurierung der durch die Kontroll-Vermittlungseinrichtung CONT bereitgestellten Leistungsmerkmale können entsprechende Teilnehmerselbsteingaben an der physikalisch an der ersten Vermittlungseinrichtung LE1 angeschlossenen Fernsprechendeinrichtung KEc vorgenommen werden. Für die Durchführung von Teilnehmerselbsteingaben zur Konfigurierung von Teilnehmerleistungsmerkmalen und für den Aufbau von Kommunikationsbeziehungen in das übergeordnete Kommunikationsnetz KN ist die an das erste Vermittlungseinrichtung LE1 angeschlossene Fernsprechendeinrichtung KEc derart administriert, das bei Aktivierung der Kommunikationsendeinrichtung KEc - beispielsweise bei Abheben des Telefonhörers - eine Nutzkanalverbindung vnk über die Zwischenamtsleitung TR zu der Kontroll-Vermittlungseinrichtung CONT aufgebaut und die der Fernsprechendeinrichtung KEc zugeordnete, virtuelle Teilnehmerrufnummer VNR = E123 als CLI - Calling Line Identification - an den Controller CONT übermittelt wird. Durch im Controller CONT angeordnete Auswertemittel wird mittels der übermittelten, virtuelle Teilnehmerrufnummer VNR = E123 der entsprechende Datensatz DSCc in der Datenbasis DBC ermittelt und die aufgebaute Verbindung der erkannten, virtuellen Fernsprechendeinrichtung KEc' zugeordnet. Anschließend werden die über die Nutzkanalverbindung vnk übermittelten Signalisierungsinformationen entsprechend ausgewertet und weiterverarbeitet.

Bei von der Fernsprechendeinrichtung KEc in Richtung Kommunikationsnetz KN zu vermittelnden Kommunikationsbeziehungen wird durch den Controller CONT die übermittelte, virtuelle Teilnehmerrufnummer VNR = E123 in die entsprechende, reale Teilnehmerrufnummer RNR = 123 umgewandelt, mit welcher die Fernsprechendeinrichtung KEc innerhalb des Kommunikationsnetzes KN eindeutig adressiert ist. Die umgewandelte Teilnehmerrufnummer RNR = 123 wird anschließend beim Aufbau der Kommunikationsbeziehung innerhalb des Kommunikationsnetzes KN im Rahmen der Signalisierungsinformationen weitervermittelt.

In Richtung Fernsprechendeinrichtung KEc zu übermittelnde Kommunikationsbeziehungen bzw. Verbindungen - z.B. mit der Ziel-Rufnummer RNR = 123 werden zuerst an die Kontroll-Vermittlungseinrichtung CONT vermittelt. Durch die in der Kontroll-Vermittlungseinrichtung CONT angeordneten Auswertemittel wird mittels der übermittelten Teilnehmerrufnummer RNR = 123 der entsprechende Datensatz DBCc in der Datenbasis DB ermittelt und die eingehende Kommunikationsbeziehung als eine an die virtuell zugeordnete Kommunikationsendeinrichtung KEc weiterzuvermittelnde Kommunikationsbeziehung erkannt. Durch den Controller CONT wird die Teilnehmerrufnummer RNR = 123 in die virtuelle Teilnehmerrufnummer VNR = E123 umgewandelt.

Anschließend wird eine Nutzkanalverbindung vnk über die Zwischenamtsleitung TR zur ersten Vermittlungseinrichtung LE1 aufgebaut über welche die virtuelle Teilnehmerrufnummer VNR = E123 übermittelt wird. Durch in der ersten Vermittlungseinrichtung LE1 angeordnete Auswertemittel wird mittels der übermittelten, virtuellen Teilnehmerrufnummer VNR = E123 der entsprechende Datensatz DSc in der Datenbasis DB ermittelt, durch welchen die Teilnehmeranschlußleitung zur Fernsprechendeinrichtung KEc adressiert ist. Anschließend wird die Kommunikationsbeziehung über die Nutzkanalverbindung vnk von der Kontroll-Vermittlungseinrichtung CONT über die erste Vermittlungseinrichtung LE1 an die Fernsprechendeinrichtung KEc weitersignalisiert.

Für die Konfigurierung bzw. Einstellung der durch die Kontroll-Vermittlungseinrichtung CONT bereitgestellten Teilnehmerleistungsmerkmale im Rahmen von Teilnehmerselbsteingaben seitens der Fernsprechendeinrichtung KEc wird in beschriebener Art und Weise eine Nutzkanalverbindung vnk von der ersten Vermittlungseinrichtung LE1 über die Zwischenamtsleitung TR zum Controller CONT aufgebaut wobei beim Verbindungsaufbau die im Datensatz DSc gespeicherte, virtuelle Teilnehmerrufnummer VNR = E123 übermittelt wird. Durch Auswertung der virtuellen Teilnehmerrufnummer VNR = E123 - d.h. Vergleich der virtuellen Teilnehmerrufnummer VNR = E123 mit den in der Datenbasis DBC gespeicherten Informationen - wird die Fernsprechendeinrichtung KEc als virtuelle Fernsprechendeinrichtung KEc' erkannt. Über die Nutzkanalverbindung werden die mittels Teilnehmerselbsteingaben beispielsweise am Bedienfeld der Fernsprechendeinrichtung KEc eingegebenen Konfigurierungsinformationen zur Konfigurierung der Teilnehmerleistungsmerkmale wie B-Rufnummern als Wahlinformationen von der ersten Vermittlungseinrichtung LE1 an die Kontroll-Vermittlungseinrichtung CONT übermittelt. Für die Übermittlung der Konfigurierungsinformationen wird beispielsweise die Möglichkeit der Nachwahl und der "Inband"-Ziffernübertragung via MFV - Mehrfrequenz-Wahlverfahren - eingesetzt. Dazu muß die erste Vermittlungseinrichtung LE1 MFV-fähig ausgestaltet sein. Des Weiteren müssen im Controller CONT entsprechende Mittel - MFV-Empfänger - zur Auswertung der mittels MFV übermittelten Informationen angeordnet sein. Nach der Konfigurierung eines oder mehrerer durch die Kontroll-Vermittlungseinrichtung CONT bereitgestellten Teilnehmerleistungsmerkmale, beispielsweise durch entsprechende Teilnehmerselbsteingaben, wird die über die Zwischenamtsleitung TR aufgebaute Nutzkanalverbindung vnk zwischen der Kontroll-Vermittlungseinrichtung CONT und der ersten Vermittlungseinrichtung LE1 abgebaut, wobei die weitere Steuerung der konfigurierten Teilnehmerleistungsmerkmale durch die Kontroll-Vermittlungseinrichtung CONT erfolgt. Die Steuerung bzw. Ausführung der für die virtuelle Fernsprecheinrichtung KEc' bereitgestellten Teilnehmerleistungsmerkmale erfolgt dabei unter Verwendung der der virtuellen Fernsprecheinrichtung KEc' zugeordneten, im Datensatz DBc gespeicherten, realen Teilnehmerrufnummer RNR = 123. Ist im Rahmen der Ausführung eines der virtuellen Kommunikationseinrichtung KEc' zugeordneten Teilnehmerleistungsmerkmale ein Verbindung zu der physikalisch an die erste Vermittlungseinrichtung LE1 angeschlossenen Fernsprechendeinrichtung KEc erforderlich, so wird in beschriebener Art und Weise unter Verwendung der virtuellen Teilnehmerrufnummer VNR = E123 eine Nutzkanalverbindung vnk von der Kontroll-Vermittlungseinrichtung CONT über die Zwischenamtsleitung TR zur ersten Vermittlungseinrichtung LE1 und von dieser zur Fernsprechendeinrichtung KEc aufgebaut.

Dadurch daß der Aufbau von Kommunikationsbeziehungen von und zu der virtuellen Kommunikationsendeinrichtung KEc' durch die Kontroll-Vermittlungseinrichtung CONT gesteuert wird, ist der aktuelle vermittlungstechnischen bzw. betriebstechnischen Zustand der physikalisch an die erste Vermittlungseinrichtung LE1 angeschlossenen Fernsprechendeinrichtung KEc bekannt bzw. erfaßbar, wobei entsprechende, den vermittlungstechnischen bzw. betriebstechnischen Zustand repräsentierende Zustands-Informationen im entsprechenden Datensatz DSCc gespeichert sind. Mit Hilfe der gespeicherten Zustands-Informationen kann im Rahmen des erfindungsgemäßen Verfahrens eine vom aktuellen vermittlungstechnischen bzw. betriebstechnischen Zustand der physikalisch an die erste Vermittlungseinrichtung LE1 angeschlossenen Fernsprechendeinrichtung KEc abhängige Steuerung der durch die Kontroll-Vermittlungseinrichtung CONT bereitgestellten Teilnehmerleistungsmerkmale realisiert werden - z.B. das rufzustandabhängige Teilnehmerleistungsmerkmal "Call-Forwarding on Busy". Dabei wird im Controller CONT ein vollständiges "Busy/Idle-Handling" für die virtuelle Kommunikationsendeinrichtung KEc' durchgeführt.

Der Aufbau von Kommunikationsbeziehungen von und zu der physikalisch der ersten Vermittlungseinrichtung LE1 zugeordneten Fernsprechendeinrichtung KEc über die Kontroll-Vermittlungseinrichtung CONT wird auch als Ruf-Kanalisierung bezeichnet. Durch die Ruf-Kanalisierung kann der jeweilige aktuelle vermittlungstechnische und betriebstechnische Zustand der Kommunikationsendeinrichtung KEc durch die Kontroll-Vermittlungseinrichtung CONT erfaßt und beispielsweise als vermittlungstechnische Informationen im jeweiligen Datensatz DSCc in der Datenbasis DBC gespeichert werden.

Neben den bereits beschriebenen Realisierungen der Ruf-Kanalisierung mittels Modifikation der Teilnehmerrufnummern und administrativer Anpassung des Routings innerhalb des Kommunikationsnetzes kann die Rufkanalisierung von in Richtung der Fernsprechendeinrichtung KEc zu vermittelnden Kommunikationsbeziehungen anhand zweier weiterer Realisierungsvarianten erfolgen.

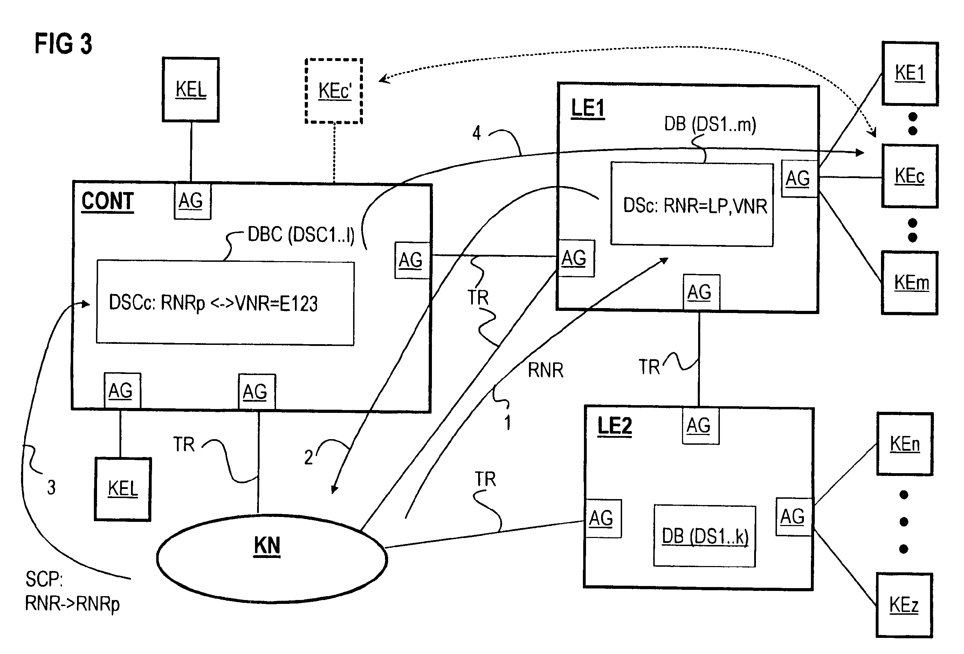

FIG 3 zeigt eine erste alternativen Ausgestaltungsvariante der Rufkanalisierung von in Richtung Fernsprechendeinrichtung KEc zu vermittelnden Kommunikationsbeziehungen mittels Modifikation der Teilnehmerrufnummer RNR und Ausnutzung des vermittlungstechnischen Leistungsmerkmales "Nummernportabilität" bzw. "number portability". Wie bereits in der ersten Realisierungsvariante beschrieben, wird die Teilnehmerrufnummer RNR der Fernsprechendeinrichtung KEc per Administration derart modifiziert, daß diese nicht mehr direkt, d.h. vom Kommunikationsnetz KN aus, anwählbar sind, jedoch noch zum Routing zwischen der ersten Vermittlungseinrichtungen LE1 und der Kontroll-Vermittlungseinrichtung CONT verwendbar ist. Die ursprünglich der Fernsprechendeinrichtung KEc zugeordnete Teilnehmerrufnummer RNR bzw. der der Teilnehmerrufnummer zugeordnete Teilnehmeranschluß wird als "portiert" gekennzeichnet, wobei eine die Portierung repräsentierende Information - hier "LP" - in der Datenbasis DB der ersten Vermittlungseinrichtung LE1 gespeichert wird. Der als portiert gekennzeichneten Fernsprechendeinrichtung KEc, bzw. deren ursprüngliche Rufnummer RNR wird eine weitere Portierungs-Teilnehmerrufnummer RNRp zugeordnet, welche im übergeordneten Kommunikationsnetz KN gespeichert wird. Die Portierungs-Teilnehmerrufnummer RNRp wird zusätzlich im entsprechenden Datensatz DSCc der Datenbasis DBC gespeichert. Beim Aufbau einer Kommunikationsbeziehung aus dem Kommunikationsnetz KN unter Verwendung der ursprünglichen Teilnehmerrufnummer RNR wird die Kommunikationsbeziehung zuerst an die entsprechende, den gewählten Teilnehmeranschluß der Fernsprechendeinrichtung KEc aufweisende erste Vermittlungseinrichtung LE1 vermittelt - durch einen ersten Pfeil verdeutlicht. Dadurch, daß der gewählte Teilnehmeranschluß bzw. die Fernsprechendeinrichtung KEc als portiert gekennzeichnet ist, wird die Kommunikationsbeziehung von der ersten Vermittlungseinrichtung LE1 in das Kommunikationsnetz KN zurückvermittelt. Innerhalb des Kommunikationsnetzes KN wird mit Hilfe von Funktionen des Intelligenten Netzes - z.B. SCP-Funktionen, Service Controll Point - die der ursprünglichen Teilnehmerrufnummer RNR zugeordnete weitere Portierungs-Teilnehmernummer RNRp ermittelt, durch welche die Kommunikationsbeziehung an die Kontroll-Vermittlungseinrichtung CONT weitervermittelt wird - durch einen dritten Pfeil verdeutlicht. In der Kontroll-Vermittlungseinrichtung CONT wird die gewählte Portierungs-Teilnehmerrufnummer RNRp in der Datenbasis DBC als einer virtuellen Kommunikationsendeinrichtung zugeordnete Teilnehmerrufnummer identifiziert und nach einer Überprüfung des aktuellen vermittlungstechnischen und betriebstechnischen Zustandes der virtuellen Kommunikationsendeinrichtung die Kommunikationsbeziehung mit Hilfe der im entsprechenden Datensatz gespeicherten Adressierungsinformationen bzw. virtuellen Teilnehmerrufnummer VNR über die Zwischenamtsleitung TR an die Fernsprechendeinrichtung KEc weitervermittelt durch einen vierten Pfeil verdeutlicht.

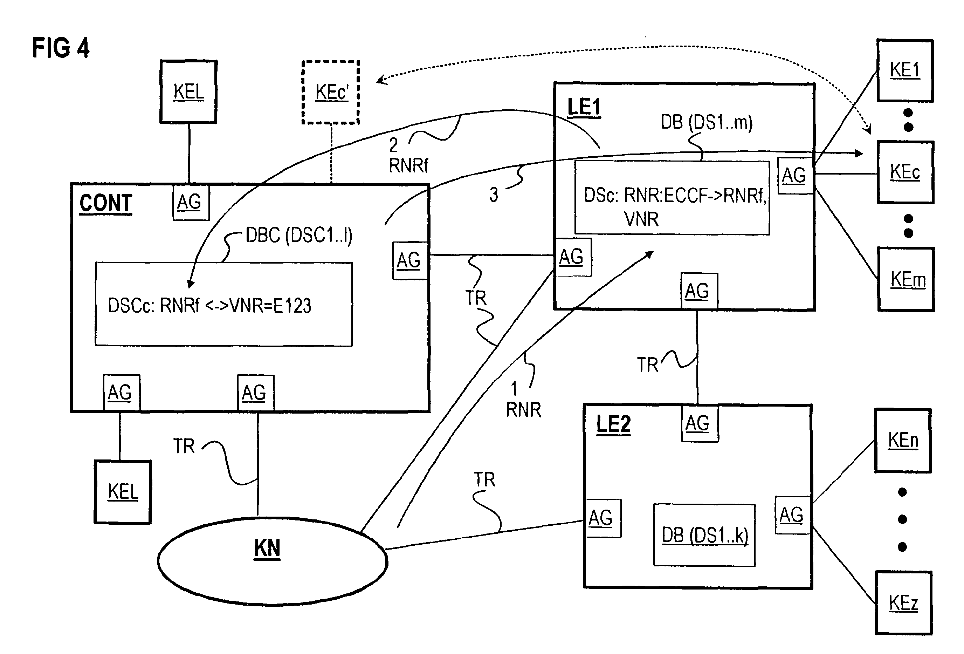

FIG 4 zeigt eine zweiten alternativen Ausgestaltungsvariante der Rufkanalisierung von in Richtung Fernsprechendeinrichtung KEc zu vermittelnden Kommunikationsbeziehungen mittels "automatischer Anrufumlenkung" von Teilnehmeranschlüssen auf die Kontroll-Vermittlungseinrichtung CONT. Die "automatische Anrufumlenkung" stellt ein durch aktuelle Vermittlungseinrichtungen bereitgestelltes vermittlungstechnisches Leistungsmerkmal dar - auch als "Exchange Controlled Call Forwarding", ECCF bezeichnet. Wie bereits in den beiden ersten Realisierungsvarianten beschrieben, wird die Teilnehmerrufnummern RNR der Fernsprechendeinrichtung KEc per Administration derart modifiziert, daß diese nicht mehr direkt, d.h. vom Kommunikationsnetz KN aus, anwählbar ist, jedoch noch zum Routing zwischen der ersten Vermittlungseinrichtung LE1 und der Kontroll-Vermittlungseinrichtung CONT verwendbar ist. Des Weiteren wird für die ursprünglich der Fernsprechendeinrichtung KEc, bzw. dem entsprechenden Teilnehmeranschluß zugeordnete Teilnehmerrufnummer RNR eine unbedingte Anrufumlenkung - ECCF - auf die Kontroll-Vermittlungseinrichtung CONT eingerichtet und entsprechend in den Datenbasen DB der ersten Vermittlungseinrichtung LE1 gespeichert. Dies wird beispielsweise durch die Zuordnung einer entsprechenden Routing-Information - hier RNRf - zu der jeweiligen Kommunikationsendeinrichtung KEc erreicht, wobei die Routing-Informationen RNRf zusätzlich im entsprechenden Datensatz DSCc der Datenbasis DBC gespeichert wird. Soll beispielsweise aus dem Kommunikationsnetz KN eine Kommunikationsbeziehung an den Teilnehmeranschluß der Fernsprechendeinrichtung KEc vermittelt werden, wird diese Kommunikationsbeziehung anhand der gewählten Teilnehmerrufnummer RNR zuerst an die den gewählten Teilnehmeranschluß aufweisende erste Vermittlungseinrichtung LE1 vermittelt - durch einen ersten Pfeil verdeutlicht. Durch die in der Datenbasis DB der ersten Vermittlungseinrichtung LE1 gespeicherte unbedingte Anrufumlenkung - hier RNR:ECCF -> RNRf - wird die Kommunikationsbeziehung an die Kontroll-Vermittlungseinrichtung CONT umgelenkt bzw. weitervermittelt - durch einen zweiten Pfeil verdeutlicht. Mit Hilfe der im Rahmen der umgelenkten Kommunikationsbeziehung übermittelten Informationen RNRf wird durch die Kontroll-Vermittlungseinrichtung CONT in der Datenbasis DBC der entsprechende Datensatz DBCc ermittelt und die Kommunikationsbeziehung mit Hilfe der im Datensatz DBCc gespeicherten Adressierungsinformation VNR die umgelenkte Kommunikationsbeziehung über die Zwischenamtsleitung TR an die Fernsprechendeinrichtung KEc weitervermittelt - durch einen dritten Pfeil verdeutlicht.

Optional werden Klingelzeichen und fallweise unterschiedliche Klingelzeichen-Klangfarben durch geeignete Mittel in der ersten Vermittlungseinrichtung LE1 für das physikalisch daran angeschlossene Fernsprechendgerät KEc erzeugt, falls die erste Vermittlungseinrichtung LE1 entsprechend ausgestaltet ist. Unterschiedliche Klingelzeichen bzw. Klingelzeichen-Klangfarben können durch den Controller CONT durch die Verwendung von unterschiedlichen, dem virtuellen Fernsprechendgerät KEc zugeordneten virtuellen Teilnehmerrufnummern angesteuert werden.

Vorteilhaft können über Anschlußgruppen mehrere Zwischenamtsleitungen zwischen der ersten Vermittlungseinrichtung LE1 und der Kontroll-Vermittlungseinrichtung CONT angeordnet sein. Bei mehreren angeordneten Zwischenamtsleitungen - in FIG 2 nicht dargestellt - kann eine priorisierte Verbindungssteuerung von bzw. zu der daran angeschlossenen Fernsprecheinrichtung KEc realisiert werden.

Gemäß einer vorteilhaften Weiterbildung des erfindungsgemäßen Verfahrens werden mehrere der Kontroll-Vermittlungseinrichtung CONT virtuell zugeordnete Kommunikationsendeinrichtungen KE1...m, KEn...z zu einer Gruppe zusammengefaßt, wobei entsprechende Gruppen-Informationen in der Datenbasis DBC der Kontroll-Vermittlungseinrichtung CONT gespeichert werden. Den zu einer Gruppe zusammengefaßten Kommunikationsendeinrichtungen KE1...m, KEn...z werden durch die Kontroll-Vermittlungseinrichtung CONT zusätzliche gruppenspezifische Funktionen bereitgestellt, durch welche beispielsweise Leistungsmerkmale und/oder Eigenschaften von Nebenstellenanlagen realisiert werden. Beispiele für einer Gruppe zuordenbarer gruppenspezifischer Leistungsmerkmale sind:
- Zuordnung einer gruppenindividuellen Pilot-Rufnummer,
- Zuordnung eines gruppenindividuellen Such-Verfahrens - auch als Hunting-Algorithmus bezeichnet.

Mit Hilfe des der Gruppe zugeordneten Such-Verfahrens wird bei Wahl der gruppenindividuellen Pilot-Rufnummer ein aktuell freier Teilnehmeranschluß, bzw. eine aktuell freie Kommunikationsendeinrichtung innerhalb der Gruppe ermittelt. Der Gruppe können weitere an unterschiedliche im Kommunikationsnetz KN angeordnete Vermittlungseinrichtungen angeschlossene Kommunikationsendeinrichtungen KE1...z bzw. Teilnehmeranschlüsse mittels der beschriebenen virtuellen Zuordnung zugeordnet werden. Des Weiteren können auch lokal an der Kontroll-Vermittlungseinrichtung CONT angeschlossene Kommunikationsendeinrichtungen KEL der Gruppe zugeordnet werden.

Als weiteres gruppenindividuelles Leistungsmerkmal kann der mehrere Teilnehmeranschlüsse bzw. Kommunikationsendeinrichtungen umfassenden Gruppe zumindest eine Warteschlange zugeordnet werden. Warteschlangen sind üblicherweise in Nebenstellenanlagen realisierte Funktionen, welche beispielsweise in Call-Center eingesetzt werden. Zur Zuordnung des Leistungsmerkmals "Warteschlange" zu der eingerichteten Gruppe SH wird der Datenbasis DBC der Kontroll-Vermittlungseinrichtung CONT ein weiterer Speicherbereich zugeordnet, durch welchen mehrere transiente Wartepositionen realisiert sind. Auf die transienten Wartepositionen kann eine Anzahl von eingehenden Kommunikationsbeziehungen terminiert und auf eine Ansageeinheit weitergeführt werden. Die Warteschlangen-Funktionalität ist derart konfiguriert, daß an eine Teilnehmerrufnummer gerichtete Kommunikationsbeziehungen bzw. Verbindungen direkt zur entsprechenden Kommunikationsendeinrichtung vermittelt werden, sofern die entsprechende Kommunikationsendeinrichtung frei ist. Bei an die Pilot-Rufnummer der Gruppe gerichteten Kommunikationsbeziehungen wird das gruppenindividuelle Such-Verfahren aktiv. Kann im Rahmen des Such-Verfahrens kein freier Teilnehmeranschluß bzw. kein freier Nutzdatenkanal bzw. keine freie Kommunikationsendeinrichtung ermittelt werden, wird die betreffende Kommunikationsbeziehung in die Warteschlange eingereiht. Sobald ein Teilnehmeranschluß bzw. ein Nutzdatenkanal bzw. eine Kommunikationsendeinrichtung als aktuell frei ermittelt wird, wird die in die Warteschlange eingereihte Kommunikationsbeziehung an den frei gewordenen Teilnehmeranschluß weitervermittelt. Bei mehreren in die Warteschlange eingereihten Kommunikationsbeziehungen wird mittels eines Auswahlverfahrens eine Kommunikationsbeziehung ausgewählt und weitervermittelt. Eine Kommunikationsbeziehung kann beispielsweise mit Hilfe des FIFO-Prinzipes oder prioritätsgesteuert ausgewählt werden.

Gemäß einer vorteilhaften Anwendung kann das erfindungsgemäße Verfahren zur Erneuerung bzw. Modernisierung "veraltete" Kommunikationsnetze eingesetzt werden, durch welche beispielsweise nur ein eingeschränkter Umfang an Teilnehmerleistungsmerkmalen bereitgestellt werden. Hierzu werden in dem zu erneuernden Kommunikationsnetz neue, leistungsfähige Vermittlungseinrichtungen bzw. Kontroll-Vermittlungseinrichtungen so plaziert, daß in ihrem Einzugsbereich jeweils alte, im Umfang der bereitgestellten Teilnehmerleistungsmerkmale nicht mehr ausreichende und daher abzulösende Vermittlungseinrichtungen liegen. In den veralteten Vermittlungseinrichtungen werden nur noch die darin enthaltenen Anschlußgruppen für den Teilnehmeranschluß und die Weiterführung von abgehenden Verkehr von den angeschlossenen Teilnehmeranschlußleitungen an die übergeordnete moderne Vermittlungseinrichtung über Zwischenamtsleitungen verwendet, bzw. um ankommende Verbindungen über die angeschlossenen Teilnehmerleitungen auf die Kommunikationsendeinrichtungen zu verteilen. Die veralteten Vermittlungseinrichtungen werden im Sinne des erfindungsgemäßen Verfahrens in ihrer Funktion als Konzentrator genutzt, wobei durch die alten Vermittlungseinrichtungen keine Steuerung von Teilnehmerleistungsmerkmalen erfolgt. Aufgrund der nicht mehr benötigten Steuerung von Teilnehmerleistungsmerkmalen kann die Funktionsumfang der veralteten Vermittlungseinrichtungen eingeschränkt werden, wobei jedoch eine Änderung der in der Vermittlungseinrichtung realisierten Steuersoftware nicht erforderlich sein soll. Für die Realisierung des erfindungsgemäßen Verfahrens sind in den veralteten Vermittlungseinrichtungen noch folgende Funktionen erforderlich:
- Teilnehmeranschlüsse und zugehörige Leitungssteuerungen zur Überwachung von betriebstechnischen und vermittlungstechnischen Zuständen der daran angeschlossenen Kommunikationsendeinrichtungen ("Busy/Idle-Handling, Ringing, MFV")
- zumindest eine Zwischenamtsleitung von der Vermittlungseinrichtung an die übergeordnete Vermittlungseinrichtung
- die Zwischenamtsleitung kann beispielsweise als TUP, ISUP oder MFC-R2-Leitung ausgestaltet sein,
- Möglichkeit der Zuordnung virtueller Teilnehmerrufnummern zu den angeschlossenen Teilnehmern bzw. Kommunikationsendeinrichtungen
- eine in der alten Vermittlungseinrichtung angeordnete Vermittlungstechnik mit reduziertem Funktionsumfang - z.B. von daran angeschlossenen Kommunikationsendeinrichtungen abgehende Verbindungen werden direkt an die Kontroll-Vermittlungseinrichtung weitergeleitet, alle eingehenden Verbindungen über die Kontroll-Vermittlungseinrichtung CONT werden mit Hilfe der Teilnehmerrufnummer bzw. der virtuellen Teilnehmerrufnummer direkt die entsprechenden, angeschlossenen Kommunikationsendeinrichtungen weitergeleitet,
- eine lokale Administration, Wartung bzw. Maintenance und Sicherungstechnik.

Vorteilhaft kann bei der Kommunikationsanordnung gemäß FIG 2 zumindest eine der an die erste Vermittlungseinrichtung LE1 angeschlossenen Kommunikationsendeinrichtungen KE1..m als drahtloses Mobilfunk-Kommunikationsendgerät - auch als Handy bezeichnet - ausgestaltet sein. Entsprechend kann die erste Vermittlungseinrichtung LE1 als in einem Mobilfunknetz angeordnete Mobilfunk-Vermittlungseinrichtung - auch als MSC bzw. Mobile Switching Center bezeichnet - ausgestaltet sein. Mit Hilfe des erfindungsgemäßen Verfahrens kann die an die Mobilfunk-Vermittlungseinrichtung angeschlossene, drahtlose Kommunikationseinrichtung in beschriebener Art und Weise an eine übergeordnete, mit dem Festnetz verbundene Vermittlungseinrichtung als virtuelle Kommunikationseinrichtung zugeordnet werden, wobei durch die im Festnetz angeordnete Vermittlungseinrichtung dem Mobilfunk-Teilnehmer beispielsweise Centrex-Dienste bereitgestellt werden.

Weitere Beispiele für im Rahmen des erfindungsgemäßen Verfahrens realisierbare Teilnehmerleistungsmerkmale sind:
Umlenkung (B-seitig), z.B.
   - Call Forwarding Busy, Controlled by Subscriber (CFB)
   - Call Forwarding Unconditional, Controlled by Operator (CFCO-U)
Weiterleitung, z.B.
   - Call Transfer, A-Side (Secretary Call Transfer)
Call Waiting, z.B.
   - Call Waiting Deluxe (CWD)
   - Call Waiting Indication for Called Subscriber (CWI)
Rückruf, z.B.
   - Automatic Call Memory Service (ACM)
Weckruf, z.B.
   - Alarm Call Service
Konferenz, z.B.
   - Three-party Conference (TPC)
   - Telemeeting (Meet me Conference)
Message Waiting Indication, z.B.
   - Message Waiting Indication, according ETSI
   - Message Waiting Indication, via Calling party number (MWI)
Internet, z.B.
   - Call Completion Internet Busy (CCIB)
   - Call Waiting Internet Busy (CWIB)

## Patentansprüche

1. Verfahren zur Realisierung von Teilnehmerleistungsmerkmalen für zumindest eine an zumindest eine zumindest teilweise die Teilnehmerleistungsmerkmale nicht bereitstellenden Vermittlungseinrichtung (LE1,2) angeschlossene Kommunikationsendeinrichtung (KE1...m, KEn...z),
- bei dem die zumindest eine physikalisch an die Vermittlungseinrichtung (LE1) angeschlossene Kommunikationsendeinrichtung (KEc) einer mit der Vermittlungseinrichtung (LE1) verbundenen, die Teilnehmerleistungsmerkmale bereitstellenden, weiteren Vermittlungseinrichtung (CONT) als virtuelle Kommunikationsendeinrichtung (KEc') zugeordnet wird,
- bei dem die Teilnehmerleistungsmerkmale für die virtuelle Kommunikationsendeinrichtung (KEc') zumindest teilweise durch die weitere Vermittlungseinrichtung (CONT) gesteuert werden,
**dadurch gekennzeichnet,**
- **daß** ein Aufbau einer Kommunikationsbeziehung von und zu der zumindest einen physikalisch an die Vermittlungseinrichtung (LE1) angeschlossenen Kommunikationsendeinrichtung (KEc) im vermittlungstechnischen Sinne über die weitere Vermittlungseinrichtung (CONT) erfolgt, wobei die Signalisierung der Kommunikationsbeziehung durch die weitere Vermittlungseinrichtung (CONT) gesteuert wird,
- **daß** in Abhängigkeit von der signalisierten Kommunkationsbeziehung entsprechende, den aktuellen vermittlungstechnischen und/oder betriebstechnischen Zustand der virtuellen Kommunikationsendeinrichtung (KEc') repräsentierende Zustands-Informationen abgeleitet und in der weiteren Vermittlungseinrichtung (CONT) gespeichert werden,
- **daß** die Teilnehmerleistungsmerkmale für die virtuelle Kommunikationsendeinrichtung (KEc') in Abhängigkeit von den jeweils aktuell gespeicherten Zustands-Informationen gesteuert werden.

2. Verfahren nach Anspruch 1,
**dadurch gekennzeichnet,**
**daß** die Vermittlungseinrichtung (LE1) derart administriert ist, daß bei einer Aktivierung der zumindest einen Kommunikationsendeinrichtung (KEc) automatisch eine Nutzkanalverbindung (vnk) zu der weiteren Vermittlungseinrichtung (CONT) aufgebaut und die Kommunikationsendeinrichtung (KEc) mit der aufgebauten Nutzkanalverbindung (vnk) vermittelt wird.

3. Verfahren nach Anspruch 2,
**dadurch gekennzeichnet,**
- **daß** über die aufgebaute Nutzkanalverbindung (vnk) und die Vermittlungseinrichtung (LE1) die zumindest eine Kommunikationsendeinrichtung (KEc) eindeutig adressierende Identifizierungs-Informationen (VNR) an die weitere Vermittlungseinrichtung (CONT) übermittelt werden,
- **daß** Konfigurierungs-Informationen von der Kommunikationsendeinrichtung (KEc) und/oder von der Vermittlungseinrichtung (LE1) über die Nutzkanalverbindung (vnk) an die weitere Vermittlungseinrichtung (CONT) übermittelt werden,
- **daß** in der weiteren Vermittlungseinrichtung (CONT) die Teilnehmerleistungsmerkmale in Abhängigkeit von den übermittelten Konfigurierungs-Informationen für die entsprechende virtuelle Kommunikationsendeinrichtung (KEc') aktiviert bzw. konfiguriert werden.

4. Verfahren nach Anspruch 3,
**dadurch gekennzeichnet,**
**daß** eine in Richtung Kommunikationsendeinrichtung (KEc) aufzubauende Kommunikationsbeziehung zuerst an die weitere Vermittlungseinrichtung (CONT) vermittelt wird, anschließend die an die weitere Vermittlungseinrichtung (CONT) vermittelte Kommunikationsbeziehung mit Hilfe der entsprechenden Identifizierungs-Informationen (VNR) an die Vermittlungseinrichtung (LE1) weitergeleitet und von dieser der zumindest einen Kommunikationsendeinrichtung (KEc) signalisiert wird.

5. Verfahren nach Anspruch 3,
**dadurch gekennzeichnet,**
- **daß** die der Kommunikationsendeinrichtung (KEc) zugeordnete Rufnummer (RNR) im Rahmen des vermittlungstechnischen Leistungsmerkmals "Number Portability" als portiert **gekennzeichnet** wird,
- **daß** eine in Richtung Kommunikationsendeinrichtung (KEc) aufzubauende Kommunikationsbeziehung im Rahmen des vermittlungstechnischen Leistungsmerkmals "Number Portability" an die entsprechende Vermittlungseinrichtung (LE1), an welcher die Kommunikationsendeinrichtung (KEc) angeschlossen ist, vermittelt und anschließend mittels des vermittlungstechnischen Leistungsmerkmals "Number Portability" an die weitere Vermittlungseinrichtung (CONT) vermittelt wird, und anschließend mit Hilfe der entsprechenden Identifizierungs-Informationen (VNR) an die Vermittlungseinrichtung (LE1) weitergeleitet und von dieser der zumindest einen Kommunikationsendeinrichtung (KEc) signalisiert wird.

6. Verfahren nach Anspruch 3,
**dadurch gekennzeichnet,**
**daß** eine in Richtung Kommunikationsendeinrichtung (KEc) aufzubauende Kommunikationsbeziehung zuerst an die entsprechende Vermittlungseinrichtung (LE1), an welcher die Kommunikationsendeinrichtung (KEc) angeschlossen ist, vermittelt und anschließend im Rahmen des vermittlungstechnischen Leistungsmerkmals "Anrufumlenkung" an die weitere Vermittlungseinrichtung (CONT) umgelenkt wird, und anschließend mit Hilfe der entsprechenden Identifizierungs-Informationen (VNR) an die Vermittlungseinrichtung (LE1) weitergeleitet und von dieser der zumindest einen Kommunikationsendeinrichtung (KEc) signalisiert wird.

7. Verfahren nach einem der vorherigen Ansprüche,
**dadurch gekennzeichnet,**
**daß** die weitere Vermittlungseinrichtung (CONT) integraler Bestandteil eines Kommunikationsnetzes (KN) ist, wobei von und zu der zumindest einen Kommunikationsendeinrichtung (KEc) aufzubauende Kommunikationsbeziehungen stets über die weitere Vermittlungseinrichtung (CONT) vermittelt werden.

8. Verfahren nach einem der Ansprüche 3 bis 7,
**dadurch gekennzeichnet,**
**daß** die die zumindest eine Kommunikationsendeinrichtung (KEc) adressierenden Identifizierungs-Informationen (VNR) in der Vermittlungseinrichtung (LE1) und in der weiteren Vermittlungseinrichtung (LE2) gespeichert sind.

9. Verfahren nach einem der Ansprüche 3 bis 8,
**dadurch gekennzeichnet,**
**daß** die Konfigurierungs-Informationen im Rahmen von Teilnehmerselbsteingaben an der Kommunikationsendeinrichtung (KEc) gebildet werden.

10. Verfahren nach einem der vorherigen Ansprüche,
**dadurch gekennzeichnet,**
**daß** die Vermittlungseinrichtung (LE1) über eine Zwischenamtsleitung (TR) mit der weiteren Vermittlungseinrichtung (CONT) verbunden ist.

11. Verfahren nach einem der Anspruch 3 bis 10,
**dadurch gekennzeichnet,**
**daß** die Identifizierungs-Informationen beim Aufbau der Nutzkanalverbindung von der Vermittlungseinrichtung (LE1) zur weiteren Vermittlungseinrichtung (CONT) mit Hilfe des vermittlungstechnischen Dienstes "Calling Line Identification", CLI übermittelt werden.

12. Verfahren einem der Ansprüche 3 bis 11,
**dadurch gekennzeichnet,**
**daß** die Konfigurations-Informationen im Rahmen eines Inband-Übertragungsverfahrens oder im Rahmen eines Mehrfrequenzverfahrens, MFV an die weitere Vermittlungseinrichtung (CONT) übermittelt und in dieser entsprechend ausgewertet werden.

13. Verfahren nach einem der vorherigen Ansprüche,
**dadurch gekennzeichnet,**
**daß** die zumindest eine Kommunikationsendeinrichtung (KEc) über einen analogen oder digitalen Teilnehmeranschluß (AG) an die Vermittlungseinrichtung (LE1) angeschlossen ist.

14. Verfahren nach einem der vorherigen Ansprüche,
**dadurch gekennzeichnet,**
**daß** durch die weitere Vermittlungseinrichtung (CONT) gruppenspezifische Leistungsmerkmale bereitgestellt werden, wobei zumindest ein Teil der an die zumindest eine Vermittlungseinrichtung (LE1,2) angeschlossenen Kommunikationsendeinrichtungen (KE1...m, KEn...z) und optional zumindest eine an die weitere Vermittlungseinrichtung (CONT) angeschlossene Kommunikationsendeinrichtung (KEL) zumindest einer Gruppe zuordenbar sind.

15. Verfahren nach Anspruch 14,
**dadurch gekennzeichnet,**
**daß** der zumindest einen Gruppe zumindest eine gruppenindividuelle Gruppen-Rufnummer zugeordnet ist.

16. Verfahren nach Anspruch 15,
**dadurch gekennzeichnet,**
**daß** bei einer an die gruppenindividuelle Gruppen-Rufnummer zu vermittelnden Kommunikationsbeziehung der zumindest einen Gruppe ein gruppenindividuelles Such-Verfahren - Hunting-Algorithmus - zum Ermitteln einer aktuell freien Kommunikationsendeinrichtung (KE1...m, KEn...z) innerhalb der Gruppe zugeordnet ist.

17. Verfahren nach einem der Ansprüche 14 bis 16,
**dadurch gekennzeichnet,**
**daß** der Gruppe zumindest eine gruppenindividuelle Warteschlange zugeordnet ist, wobei für den Fall, daß im Rahmen des Such-Verfahrens keine aktuell freie Kommunikationsendeinrichtung (KE1...m, KEn...z) innerhalb der Gruppe ermittelt wird, die Kommunikationsbeziehung in der zumindest einen Warteschlange eingereiht wird, und nach Feststellen einer freien Kommunikationsendeinrichtung (KE1...m, KEn...z) innerhalb der Gruppe die Kommunikationsbeziehung aus der Warteschlange herausgelöst und an die freie Kommunikationsendeinrichtung (KE1 ... m, KEn...z) weitervermittelt wird.

18. Verfahren nach einem der vorherigen Ansprüche,
**dadurch gekennzeichnet,**
**daß** die zumindest eine Kommunikationsendeinrichtung (KEc)
- als analoge Kommunikationsendeinrichtung (KEc), oder
- als ISDN-konforme Kommunikationsendeinrichtung (KEc), oder
- als schnurlose Kommunikationsendeinrichtung (KEc), oder
- als mobile, drahtlose Mobilfunk-Kommunikationsendeinrichtung (KEc)
ausgestaltet ist.

19. Verfahren nach einem der Ansprüche 3 bis 18,
**dadurch gekennzeichnet,**
**daß** die die zumindest eine Kommunikationsendeinrichtung (KEc) eindeutig adressierenden Identifizierungs-Informationen (VNR) als Teilnehmerrufnummer ausgestaltet sind.

20. Kommunikationsanordnung zur Realisierung von Teilnehmerleistungsmerkmalen für zumindest eine an eine zumindest teilweise die Leistungsmerkmale nicht bereitstellenden Vermittlungseinrichtung (LE1, 2) angeschlossene Kommunikationsendeinrichtung (KE1...m, KEn...z),
- bei der die Vermittlungseinrichtung (LE1) an eine weitere Vermittlungseinrichtung (CONT) angeschlossen ist,
- bei der in der Vermittlungseinrichtung (LE1) und in der weiteren Vermittlungseinrichtung (CONT) Zuordnungsmittel zur virtuellen Zuordnung der zumindest einen physikalisch an die Vermittlungseinrichtung (LE1) angeschlossenen Kommunikationsendeinrichtung (KEc) als virtuelle kommunikationsendeinrichtung (KEc') zu der weiteren Vermittlungseinrichtung (CONT) angeordnet sind,
**dadurch gekennzeichnet,**
- **daß** die weitere Vermittlungseinrichtung (CONT) Steuermittel zur Bereitstellung und Steuerung aller Teilnehmerleistungsmerkmalen aufweist,
- **daß** die Zuordnungsmittel und die Steuermittel derart ausgestaltet sind,
-- **daß** ein Aufbau einer Kommunikationsbeziehung von und zu der zumindest einen physikalisch an die Vermittlungseinrichtung (LE1) angeschlossenen Kommunikationsendeinrichtung (KEc) im vermittlungstechnischen Sinne über die weitere Vermittlungseinrichtung (CONT) erfolgt, wobei die Signalisierung der Kommunikationsbeziehung durch die weitere Vermittlungseinrichtung (CONT) erfolgt,
-- **daß** in Abhängigkeit der signalisierten Kommunikationsbeziehung entsprechende, den aktuellen vermittlungstechnischen und/oder betriebstechnischen Zustand reprasentierende Zustands-Informationen abgeleitet und in der weiteren Vermittlungseinrichtung (CONT) gespeichert werden, und
-- **daß** die Teilnehmerleistungsmerkmale für die virtuelle Kommunikationsendeinrichtung (KEc') in Abhängigkeit von den jeweils aktuell gespeicherten Zustands-Informationen gesteuert werden.

21. Kommunikationsanordnung nach Anspruch 20,
**dadurch gekennzeichnet,**
**daß** die zumindest eine Kommunikationsendeinrichtung (KEc)
- als analoge Kommunikationsendeinrichtung (KEc), oder
- als ISDN-konforme Kommunikationsendeinrichtung (KEc), oder
- als schnurlose Kommunikationsendeinrichtung (KEc), oder
- als mobile, drahtlose Mobilfunk-Kommunikationsendeinrichtung (KEc)
ausgestaltet ist.

22. Kommunikationsanordnung nach Anspruch 20 oder 21,
**dadurch gekennzeichnet,**
**daß** die Vermittlungseinrichtung (LE1) und die weitere Vermittlungseinrichtung (CONT) in einem Kommunikationsnetz (KN) angeordnet sind.

23. Kommunikationsanordnung nach einem der Ansprüche 20 bis 22,
**dadurch gekennzeichnet,**
- **daß** die Vermittlungseinrichtung (LE1) als in einem Mobilfunknetz angeordnete Mobilfunk-Vermittlungseinrichtung ausgestaltet ist,
- **daß** die weitere Vermittlungseinrichtung (CONT) in einem öffentlichen Festnetz (KN) angeordnet ist, und
- **daß** die zumindest eine an die Mobilfunk-Vermittlungseinrichtung angeschlossene Kommunikationsendeinrichtung (KEc) als drahtloses, mobiles Kommunikationsendgerät ausgestaltet ist.

## Claims

1. Method for implementing subscriber features for at least one communications terminal (KE1...m, KEn...z) which is connected to at least one switching device (LE1, 2) which at least partially does not provide the subscriber features,
- in which the at least one communications terminal (KEc) which is physically connected to the switching device (LE1) is assigned as a virtual communications terminal (KEc') to a further switching device (CONT) which is connected to the switching device (LE1) and provides the subscriber features,
- in which the subscriber features for the virtual communications terminal (KEc') are at least partially controlled by the further switching device (CONT),
**characterized**
- **in that** a communications relation from and to the at least one communications terminal (KEc) which is physically connected to the switching device (LE1) is set up in the switching sense via the further switching device (CONT), the signaling of the communications relation being controlled by the further switching device (CONT),
- **in that** corresponding state information which represents the current switching and/or operating state of the virtual communications terminal (KEc') is derived as a function of the signaled communications relation and stored in the further switching device (CONT),
- **in that** the subscriber features for the virtual communications terminal (KEc') are controlled as a function of the respective currently stored state information.

2. Method according to claim 1, **characterized in that** the switching device (LE1) is administered in such a way that, when the at least one communications terminal (KEc) is actuated, a user channel connection (vnk) is automatically set up to the further switching device (CONT) and the communications terminal (KEc) is switched to the set-up user channel connection (vnk).

3. Method according to claim 2, **characterized**
- **in that**, via the set-up user channel connection (vnk) and the switching device (LE1), identification information (VNR) which unambiguously addresses the at least one communications terminal (KEc) is transmitted to the further switching device (CONT),
- **in that** configuration information is transmitted from the communications terminal (KEc) and/or from the switching device (LE1) to the further switching device (CONT) via the user channel connection (vnk),
- **in that** the subscriber features are activated or configured in the further switching device (CONT) as a function of the transmitted configuration information for the corresponding virtual communications terminal (KEc').

4. Method according to claim 3, **characterized in that** a communications relation which is to be set up in the direction of the communications terminal (KEc) is firstly switched to the further switching device (CONT), then the communications relation which is switched to the further switching device (CONT) is transferred onward to the switching device (LE1) using the corresponding identification information (VNR) and is signaled by said switching device (LE1) to the at least one communications terminal (KEc).

5. Method according to claim 3, **characterized**
- **in that**, within the scope of the switching feature "Number Portability", the call number (RNR) which is assigned to the communications terminal (KEc) is **characterized** as ported,
- **in that**, within the scope of the switching feature "Number Portability", a communications relation which is to be set up in the direction of the communications terminal (KEc) is switched to the corresponding switching device (LE1) to which the communications terminal (KEc) is connected, and is then switched to the further switching device (CONT) by means of the switching feature "Number Portability", and is then transferred onward to the switching device (LE1) using the corresponding identification information (VNR) and is signaled by said switching device (LE1) to the at least one communications terminal (KEc).

6. Method according to claim 3, **characterized in that** a communications relation which is to be set up in the direction of the communications terminal (KEc) is firstly switched to the corresponding switching device (LE1) to which the communications terminal (KEc) is connected, and is then forwarded, within the scope of the switching feature "call forwarding", to the further switching device (CONT), and is then transferred onward to the switching device (LE1) using the corresponding identification information (VNR) and is signaled by said switching device (LE1) to the at least one communications terminal (KEc).

7. Method according to one of the preceding claims, **characterized in that** the further switching device (CONT) is an integral component of a communications network (KN), communications relations which are to be set up from and to the at least one communications terminal (KEc) always being switched via the further switching device (CONT).

8. Method according to one of claims 3 to 7, **characterized in that** the identification information (VNR) which addresses the at least one communications terminal (KEc) is stored in the switching device (LE1) and in the further switching device (LE2).

9. Method according to one of claims 3 to 8, **characterized in that** the configuration information is formed within the scope of subscriber self-inputs at the communications terminal (KEc).

10. Method according to one of the preceding claims, **characterized in that** the switching device (LE1) is connected to the further switching device (CONT) via an inter-office line (TR).

11. Method according to one of claim 3 to 10, **characterized in that**, when the user channel connection is set up from the switching device (LE1) to the further switching device (CONT), the identification information is transmitted using the switching service "Calling Line Identification", CLI.

12. Method according to one of claims 3 to 11, **characterized in that**, within the scope of an in-band transmission method or within the scope of a multi-frequency method, DTMF, the configuration information is transmitted to the further switching device (CONT) and correspondingly evaluated in it.

13. Method according to one of the preceding claims, **characterized in that** the at least one communications terminal (KEc) is connected to the switching device (LE1) via an analog or digital subscriber line (AG).

14. Method according to one of the preceding claims, **characterized in that** group-specific features are provided by the further switching device (CONT), at least some of the communications terminals (KE1...m, KEn...z) which are connected to the at least one switching device (LE1, 2), and optionally at least one communications terminal (KEL) which is connected to the further switching device (CONT), being capable of being assigned to at least one group.

15. Method according to claim 14, **characterized in that** at least one group-specific group call number is assigned to the at least one group.

16. Method according to claim 15, **characterized in that**, when there is a communications relation to be switched to the group-specific group call number, a group-specific search method - hunting algorithm - for determining a currently free communications terminal (KE1...m, KEn...z) within the group is assigned to the at least one group.

17. Method according to one of claims 14 to 16, **characterized in that** at least one group-specific waiting line is assigned to the group, in which case, if no currently free communications terminal (KE1...m, KEn...z) is determined within the group within the scope of the search method, the communications relation is placed in the at least one waiting line, and after a free communications terminal (KE1...m, KEn...z) is detected within the group the communications relation is removed from the waiting line and transferred onward to the free communications terminal (KE1...m, KEn...z).

18. Method according to one of the preceding claims, **characterized in that** the at least one communications terminal (KEc) is configured
- as an analog communications terminal (KEc) or
- as an ISDN-compatible communications terminal (KEc) or
- as a cordless communications terminal (KEc) or
- as a mobile, wire-free mobile radio communications terminal (KEc).

19. Method according to one of claims 3 to 18, **characterized in that** the identification information (VNR) which unambiguously addresses the at least one communications terminal (KEc) is configured as a subscriber call number.

20. Communications arrangement for implementing subscriber features for at least one communications terminal (KE1...m, KEn...z) which is connected to a switching device (LE1, 2) which at least partially does not provide the features,
- in which the switching device (LE1) is connected to a further switching device,
- in which assignment means for the virtual assignment of the at least one communications terminal (KEc) physically connected to the switching device (LE1), as a virtual communications terminal (KEc') to the further switching device (CONT), are arranged in the switching device (LE1) and in the further switching device (CONT),
**characterized**
- **in that** the further switching device (CONT) has control means for providing and controlling all the subscriber features,
- **in that** the assignment means and the control means are configured in such a way
-- that a communications relation from and to the at least one communications terminal (KEc) which is physically connected to the switching device (LE1) is set up in the switching sense via the further switching device (CONT), the signaling of the communications relation being carried out by the further switching device (CONT),
-- that corresponding state information which represents the current switching and/or operating state is derived as a function of the signaled communications relation and stored in the further switching device (CONT), and
-- that the subscriber features for the virtual communications terminal (KEc') are controlled as a function of the respective currently stored state information.

21. Communications arrangement according to claim 20, **characterized in that** the at least one communications terminal (KEc) is configured
- as an analog communications terminal (KEc) or
- as an ISDN-compatible communications terminal (KEc) or
- as a cordless communications terminal (KEc) or
- as a mobile, wire-free mobile radio communications terminal (KEc).

22. Communications arrangement according to claim 20 or 21, **characterized in that** the switching device (LE1) and the further switching device (CONT) are arranged in a communications network (KN).

23. Communications arrangement according to one of claims 20 to 22, **characterized**
- **in that** the switching device (LE1) is configured as a mobile radio switching device arranged in a mobile radio network,
- **in that** the further switching device (CONT) is arranged in a public fixed network (KN), and
- **in that** the at least one communications terminal (KEc) which is connected to the mobile radio switching device is configured as a wire-free, mobile communications terminal.

## Revendications

1. Procédé pour réaliser des caractéristiques de performances d'abonnés pour au moins un équipement terminal de communication (KE1...m, KEn...z) , raccordé à au moins un équipement de commutation (LE1, 2) ne fournissant pas au moins partiellement les caractéristiques de performances d'abonnés,
- dans lequel le au moins un équipement terminal de communication (KEc) raccordé physiquement à l'équipement de commutation (LE1) est attribué à un autre équipement de commutation (CONT) relié à l'équipement de commutation (LE1) et fournissant les caractéristiques de performances d'abonnés sous la forme d'un équipement terminal de communication (KEc') virtuel,
- dans lequel les caractéristiques de performances d'abonnés pour l'équipement terminal de communication (KEc') virtuel sont commandées au moins partiellement par l'autre équipement de commutation (CONT),
**caractérisé en ce que**
- un établissement d'une relation de communication à partir du au moins un équipement terminal de communication (KEc) raccordé physiquement à l'équipement de commutation (LE1) et vers celui-ci s'effectue dans le sens de commutation au moyen de l'autre équipement de commutation (CONT), la signalisation de la relation de communication étant commandée par l'autre équipement de commutation (CONT),
- **en ce que** des informations d'état appropriées, représentant l'état actuel de communication et/ou d'exploitation de l'équipement final de communication (KEc') virtuel sont déduites en fonction de la relation de communication signalée et sont stockées dans l'autre équipement de commutation (CONT),
- **en ce que** les caractéristiques de performances d'abonnés pour l'équipement terminal de communication (KEc') virtuel sont commandées en fonction des informations d'état respectives stockées actuellement.

2. Procédé selon la revendication 1,
**caractérisé en ce que**
l'équipement de commutation (LE1) est administré de telle sorte que, lors d'une activation du au moins un équipement terminal de communication (KEc), une liaison de canal utile (vnk) est établie automatiquement avec l'autre équipement de commutation (CONT) et l'équipement terminal de communication (KEc) est commuté avec la liaison de canal utile (vnk) établie.

3. Procédé selon la revendication 2,
**caractérisé en ce que**
- par la liaison de canal utile (vnk) établie et l'équipement de commutation (LE1), les informations d'identification (VNR) adressant clairement au moins un équipement terminal de communication (KEc) sont transmises à l'autre équipement de commutation (CONT),
- **en ce que** des informations de configuration sont transmises par l'équipement terminal de communication (KEc) et/ou par l'équipement de commutation (LE1) via la liaison de canal utile (vnk) à l'autre équipement de commutation (CONT),
- **en ce que**, dans l'autre équipement de commutation (CONT), les caractéristiques de performances d'abonnés sont activées ou configurées en fonction des informations de configuration transmises pour l'équipement terminal de communication (KEc') virtuel correspondant.

4. Procédé selon la revendication 3,
**caractérisé en ce que**
une relation de communication établie en direction de l'équipement terminal de communication (KEc) est transmise d'abord à l'autre équipement de commutation (CONT), ensuite la relation de communication transmise à l'autre équipement de commutation (CONT) est transmise à l'aide des informations d'identification (VNR) correspondantes à l'équipement de commutation (LE1) et signalée par celui-ci au moins à un équipement terminal de communication (KEc).

5. Procédé selon la revendication 3,
**caractérisé en ce que**,
- le numéro d' appel (RNR) attribué à l'équipement terminal de communication (KEc) est désigné par portée dans le cadre de la caractéristique de performance de commutation "Number Portability",
- **en ce qu'**une relation de communication à établir en direction de l'équipement terminal de communication (KEc) est transmise dans le cadre de la caractéristique de performance de commutation "Number Portability" à l'équipement de commutation correspondant (LE1), auquel l'équipement terminal de communication (KEc) est raccordé, et est transmise ensuite au moyen de la caractéristique de performance de commutation "Number Portability" à l'autre équipement de commutation (CONT), et ensuite est transmise à l'aide des informations d'identification (VNR) correspondantes à l'équipement de commutation (LE1) et est signalée par celui-ci à au moins un équipement terminal de communication (KEc).

6. Procédé selon la revendication 3,
**caractérisé en ce que**,
une relation de communication à établir en direction de l'équipement terminal de communication (KEc) est transmise d'abord à l'équipement de commutation (LE1) correspondant, auquel est raccordé l'équipement terminal de communication (KEc) et est renvoyée ensuite dans le cadre de la caractéristique de performance de commutation "renvoi d'appel" à l'autre équipement de commutation (CONT) et est acheminée ensuite à l'aide des informations d'identification (VNR) correspondantes à l'équipement de commutation (LE1) et est signalée par celui-ci à au moins un équipement terminal de communication (KEc).

7. Procédé selon l'une quelconque des revendications précédentes,
**caractérisé en ce que**,
l'autre équipement de commutation (CONT) fait partie intégrante d'un réseau de communication (KN), des relations de communication à établir à partir du au moins un équipement terminal de communication (KEc) et vers celui-ci étant transmises toujours par l'autre équipement de commutation (CONT).

8. Procédé selon l'une quelconque des revendications 3 à 7,
**caractérisé en ce que**
les informations d'identification (VNR) adressant au moins un équipement terminal de communication (KEc) sont stockées dans l'équipement de commutation (LE1) et dans l'autre équipement de commutation (LE2).

9. Procédé selon l'une quelconque des revendications 3 à 8,
**caractérisé en ce que**
les informations de configuration sont formées dans le cadre d'autoentrées d'abonné sur l'équipement terminal de communication (KEc).

10. Procédé selon l'une quelconque des revendications précédentes,
**caractérisé en ce que**
l'équipement de commutation (LE1) est relié au moyen d'une ligne de central intermédiaire (TR) à l'autre équipement de commutation (CONT).

11. Procédé selon l'une quelconque des revendications 3 à 10,
**caractérisé en ce que**
les informations d'identification sont transmises lors de l'établissement de la liaison de canal utile par l'équipement de commutation (LE1) à l'autre équipement de commutation (CONT) à l'aide du service technique de commutation "Calling Line Identification", CLI.

12. Procédé selon l'une quelconque des revendications 3 à 11,
**caractérisé en ce que**
les informations de configuration sont transmises dans le cadre d'une procédure de transmission intrabande ou dans le cadre d'un procédé multifréquence, MFV à l'autre équipement de commutation (CONT) et sont analysées de façon appropriée dans celui-ci.

13. Procédé selon l'une quelconque des revendications précédentes,
**caractérisé en ce que**
le au moins un équipement terminal de communication (KEc) est raccordé par un branchement d'abonné (AG) analogique ou numérique à l'équipement de commutation (LE1).

14. Procédé selon l'une quelconque des revendications précédentes,
**caractérisé en ce que**
des caractéristiques de performances spécifiques au groupe sont mises à disposition par l'autre équipement de commutation (CONT), au moins une partie des équipements terminaux de communication (KE1...m, KEn...z) raccordés à au moins un équipement de commutation (LE1, 2) et en option au moins un équipement terminal de communication (KEL) raccordé à l'autre équipement de commutation (CONT) pouvant être attribués à au moins un groupe.

15. Procédé selon la revendication 14,
**caractérisé en ce que**
un numéro d'appel de groupe spécifique à un groupe est attribué à au moins un groupe.

16. Procédé selon la revendication 15,
**caractérisé en ce que**,
lors d'une relation de communication à transmettre au numéro d'appel de groupe spécifique au groupe, du au moins un groupe, un procédé de recherche spécifique au groupe - algorithme de Hunting - est attribué à l'intérieur du groupe pour déterminer un équipement terminal de communication (KE1...m, KEn...z) actuellement libre.

17. Procédé selon l'une quelconque des revendications 14 à 16,
**caractérisé en ce que**
au moins une queue d'attente spécifique à un groupe est attribuée au groupe, sachant que dans le cas où, dans le cadre de la procédure de recherche, aucun équipement terminal de communication (KE1...m, KEn...z) actuellement libre n'est déterminé à l'intérieur du groupe, la relation de communication est rangée dans la au moins une queue d'attente, et après la détermination d'un équipement terminal de communication libre (KE1...m, KEn...z) à l' intérieur du groupe, la relation de communication est sortie de la queue d'attente et est transmise à l'équipement terminal de communication (KE1...m, KEn...z) libre.

18. Procédé selon l'une quelconque des revendications précédentes,
**caractérisé en ce que**
le au moins un dispositif terminal de communication (KEc) est conçu
- comme équipement terminal de communication (KEc) analogique, ou
- comme équipement terminal de communication (KEc) conforme à ISDN, ou
- comme équipement terminal de communication (KEc) sans fil, ou
- comme équipement terminal de communication de téléphonie mobile (KEc) mobile et sans fil.

19. Procédé selon l'une quelconque des revendications 3 à 18,
**caractérisé en ce que**
les informations d'identification (VNR) adressant clairement le au moins un équipement terminal de communication (KEc) sont conçues comme numéro d'appel d'abonné.

20. Dispositif de communication pour réaliser des caractéristiques de performances d'abonnés pour au moins un équipement terminal de communication (KE1...m, KEn...z) raccordé à un équipement de commutation (LE1, 2) ne mettant pas à disposition au moins partiellement les caractéristiques de performances,
- sur lequel l'équipement de commutation (LE1) est raccordé à un autre équipement de commutation (CONT),
- sur lequel, dans l'équipement de commutation (LE1) et dans l'autre équipement de commutation (CONT), sont disposés des moyens d'attribution pour l'attribution virtuelle du au moins un équipement terminal de communication (KEc) raccordé physiquement à l'équipement de commutation (LE1) en tant qu'équipement terminal de communication (KEc') virtuel à l'autre équipement de commutation (CONT),
**caractérisé en ce que**
- l'autre équipement de commutation (CONT) présente des moyens de commande pour la fourniture et la commande de toutes les caractéristiques de performances d'abonnés,
- **en ce que** les moyens d'attribution et les moyens de commande sont conçus de telle sorte que
-- un établissement d'une relation de communication à partir du au moins un équipement terminal de communication (KEc) raccordé physiquement à l'équipement de commutation (LE1) et vers celui-ci s'effectue dans le sens de la commutation par l'autre équipement de commutation (CONT), la signalisation de la relation de communication s'effectuant par l'autre équipement de commutation (CONT),
-- **en ce que** des informations d'état appropriées, représentant l'état actuel de commutation et/ou d'exploitation sont déduites en fonction de la relation de communication signalée et stockées dans l'autre équipement de commutation (CONT), et
-- **en ce que** les caractéristiques de performances d'abonnés pour l'équipement terminal de communication (KEc') virtuel sont commandées en fonction des informations d'état respectives actuellement stockées.

21. Dispositif de communication selon la revendication 20,
**caractérisé en ce que**,
le au moins un équipement terminal de communication (KEc) est conçu
- comme équipement terminal de communication (KEc) analogique, ou
- comme équipement terminal de communication (KEc) conforme à ISDN, ou
- comme équipement terminal de communication (KEc) sans fil, ou
- comme équipement terminal de communication de téléphonie mobile (KEc) mobile et sans fil.

22. Equipement de communication selon la revendication 20 ou 21,
**caractérisé en ce que**
l'équipement de commutation (LE1) et l'autre équipement de commutation (CONT) sont disposés dans un réseau de communication (KN).

23. Dispositif de communication selon l'une quelconque des revendications 20 à 22,
**caractérisé en ce**,
- l'équipement de commutation (LE1) est conçu comme un équipement de commutation de téléphonie mobile disposé dans un réseau de téléphonie mobile,
- en ce que l'autre équipement de commutation (CONT) est disposé dans un réseau fixe (KN) public, et
- en ce qu'au moins un équipement terminal de communication (KEc) raccordé à l'équipement de commutation de téléphonie mobile est conçu comme un terminal de communication mobile et sans fil.
